# EUROPÄISCHE PATENTSCHRIFT

(11) **EP 2 325 065 B1**
(45) Veröffentlichungstag und Bekanntmachung des Hinweises auf die Patenterteilung: **03.05.2017**
(21) Anmeldenummer: 10013609.2
(22) Anmeldetag: 13.10.2010
(51) Int. Cl.: B61D 17/04, B62D 33/06, B62D 65/04, B62D 25/06

(54) **Fahrerhaus eines Nutzfahrzeugs mit Mitteldachmodul**
Driver cab of a commercial vehicle with central roof module
Cabine de conducteur d'un véhicule utilitaire dotée d'un module de toit central

(30) Priorität: 18.11.2009 DE 102009053750
(43) Veröffentlichungstag der Anmeldung: 25.05.2011
(73) Patentinhaber: MAN Truck & Bus AG, 80995 München (DE)
(72) Erfinder: Eberhard, Kneifel, 89250 Senden (DE); Mederle, Günther, 85051 Ingolstadt (DE)
(74) Vertreter: v. Bezold & Partner Patentanwälte - PartG mbB

(56) Entgegenhaltungen:
- WO-A1-97/10138
- US-A1- 2003 234 556
- US-A1- 2009 256 392

## Beschreibung

### Technisches Gebiet:

Die Erfindung betrifft ein Fahrerhaus eines Nutzfahrzeugs mit einem Rohbaumodul, das eine Vorderwand, zwei Seitenwände, eine Rückwand, einen Fahrerhausboden und eine Dachkonstruktion aufweist, die miteinander verbunden sind, wobei die Dachkonstruktion das Rohbaumodul nach oben zumindest teilweise verschließt.

### Stand der Technik:

Nutzfahrzeuge, insbesondere Lastkraftwagen, verfügen über ein Fahrerhaus, auch als Fahrerkabine bezeichnet, das in der Regel kippbar mit dem Fahrgestell des Nutzfahrzeugs verbunden ist. Bei der Herstellung eines Fahrerhauses erfolgt zunächst der Fahrerhausrohbau, bei dem die unterschiedlichen Komponenten des Fahrerhauses miteinander verbunden werden. Im Anschluss daran wird das Fahrerhaus üblicherweise in der gewünschten Farbe lakkiert und schließlich im Wege einer Bandmontage mit den gewünschten Fahrerhauskomponenten versehen.

In diesem Zusammenhang ist aus der DE 103 44 994 A1 eine modular aufgebaute Fahrerhausbaureihe bekannt, die über ein einheitliches Grundmodul mit jeweils einer Vorderwand, zwei Seitenwänden, einer Rückwand und einem Fahrerhausboden verfügt. Wesentlich für die beschriebene Fahrerhausreihe ist, dass im Bereich der B-Säule ein dachseitiger Querspiegel vorgesehen ist. Der Querspiegel stellt die Aufnahme entsprechender Querkräfte im Bereich des Fahrerhausdaches sicher. In den Bereichen vor sowie hinter dem Querspiegel wird die Dachfläche mit Hilfe geeigneter Dachbauteile, die teilweise verschiedene Fahrzeugkomponenten aufnehmen, verschlossen.

Des Weiteren ist aus der US 2009/256392 A1 eine Dachkonstruktion bekannt, bei der die Dachanordnungen jeweils aus Paneelen gebildet sind. Jedes Paneel besteht dabei aus einem Außenpaneel für ästhetische Zwecke und einem Innenpaneel für Stabilisierungszwekke.

Des Weiteren ist aus der DE 10 2005 006 690 A1 ein Fahrerhaus für ein Nutzfahrzeug bekannt, bei dem im Bereich oberhalb eines Fahrerarbeitsplatzes ein großflächiges Dachaußenhautbauteil vorgesehen ist. Zur Versteifung des Fahrerhausdaches ist auch in diesem Fall in dem in Längserstreckung des Fahrerhausdaches mittleren Dachbereich ein Dachholm vorgesehen, der sich quer zur Fahrtrichtung erstreckt. Das beschriebene Dachaußenhautbauteil wird vorzugsweise als Panoramafenster ausgeführt, kann aber auch der Lüftung des Fahrzeugs oder der Aufnahme spezieller Fahrzeugkomponenten dienen.

Den aus dem Stand der Technik bekannten Fahrerhäusern ist vor allem gemein, dass sie im Bereich des Daches oberhalb der B-Säule über einen der Querversteifung dienenden Dachholm verfügen. Dieser soll vor allem die Aufnahme der im Bereich des Daches auftretenden Querkräfte gewährleisten. Das Dach derartiger Lastkraftwagen ist in der Regel als Blech-Schalenkonstruktion ausgeführt und hat die Funktion, die Kabine von oben zu verschließen und trägt darüber hinaus zur Steifigkeit und Festigkeit des Fahrerhauses bzw. der Fahrerkabine bei. Für die Montage eines Daches in der Fahrerhausfertigung kommen üblicherweise zwei unterschiedliche Montagevarianten zum Einsatz. Entweder wird das Dach bereits in der Rohbaufertigung mit den Seitenwänden sowie der Rückwand verbunden, oder aber ein separates Dachmodul, insbesondere ein Hochdach, wird nach Fertigstellung des übrigen Fahrerhauses in der Endmontage von oben auf den Fahrerhausrohbau aufgesetzt und montiert.

Ausgehend von den aus dem Stand der Technik bekannten technischen Lösungen liegt der Erfindung die Aufgabe zugrunde, einen Aufbau eines Nutzfahrzeugfahrerhauses anzugeben, mit dem auf bevorzugte Weise eine Vielzahl von Funktionsmodulen bereits im Vorfeld der eigentlichen Fahrerhausmontage in einem speziellen Dachmodul vorgruppiert werden können. Hierbei soll eine besondere Flexibilität im Hinblick auf die Gestaltung und Vorgruppierung des Dachmoduls erreicht werden. Mit der anzugebenden Dachkonstruktion soll es weiterhin möglich sein, eine Vielzahl unterschiedlicher Fahrzeugkomponenten auf einfache Weise im Dach eines Fahrerhauses zu integrieren und gleichzeitig den konstruktiven Aufwand für das Dach aufgrund der bestehenden Festigkeits- und Steifigkeitsanforderungen zu minimieren.

Die zuvor geschilderte Aufgabe wird mit einem Fahrerhaus für ein Nutzfahrzeug gemäß Anspruch 1 gelöst. Vorteilhafte Ausführungsformen der Erfindung sind Gegenstand der abhängigen Ansprüche und werden in der folgenden Beschreibung unter teilweiser Bezugnahme auf die Figuren näher erläutert.

Erfindungsgemäß ist ein Fahrerhaus eines Nutzfahrzeugs mit einem Rohbaumodul, das eine Vorderwand, zwei Seitenwände, eine Rückwand, ein Fahrerhausboden und eine Dachkonstruktion aufweist, die miteinander verbunden sind, wobei die Dachkonstruktion das Rohbaumodul nach oben zumindest teilweise verschließt, derart weitergebildet worden, dass die Dachkonstruktion über einen Dachrahmen mit zwei jeweils wenigstens abschnittsweise die Seitenwände nach oben begrenzenden Seitendachteilen und mit einem die Rückwand nach oben begrenzenden, die Seitendachteile verbindenden Heckdachteil verfügt und dass ein Mitteldachmodul vorgesehen ist, das derart in den Dachrahmen einsetzbar ist, dass sich das Mitteldachmodul in seiner Einbaulage an das Heckdachteil sowie die Seitendachteile anschließt und sich vom Heckdachteil bis in einen Bereich oberhalb einer Frontscheibe des Nutzfahrzeugs erstreckt.

Ferner ist die Frontscheibe des Nutzfahrzeugs zumindest abschnittsweise mit dem in Einbaulage befindlichen Mitteldachmodul verbunden. Bevorzugter Weise ist in diesem Fall in dem in Einbaulage vorderen Bereich des Mitteldachmoduls eine geeignete Anschlussfläche vorgesehen, auf die während der Montage des Fahrerhauses zunächst eine Kleberaupe aufbringbar und schließlich die Frontscheibe aufklebbar ist. Bei einer derartigen Ausführungsform der Erfindung wird bewusst auf ein Frontdachteil zur Versteifung der Dachkonstruktion im vorderen Bereich des Fahrerhauses verzichtet, so dass entsprechende Kräfte, bei denen es sich sowohl um Querkräfte als auch um über die Frontscheibe eingebrachte Kräfte handeln kann, ebenfalls über das erfindungsgemäß ausgeführte Mitteldachmodul aufgenommen werden. Das Mitteldachmodul ist bei einer derartigen Dachkonstruktion in Bezug auf seine Festigkeit sowie Steifigkeit in geeigneter Weise dimensioniert bzw. ausgelegt. In einer vorteilhaften Weiterbildung der Erfindung erstrecken sich die Seitendachteile jeweils von den beiden A-Säulen des Fahrerhauses bis zu den Hecksäulen. Je nach Fahrerhaustyp, als je nach dem, ob es sich um ein Fernverkehrsfahrerhaus mit Schlafkabine oder um ein Nahverkehrsfahrerhaus handelt, kann es sich bei den Hecksäulen um B- oder auch um C-Säulen handeln.

Mit Hilfe des erfindungsgemäß gestalteten Mitteldachmoduls ist es somit möglich, das Dach eines Nutzfahrzeugs mit einem einzigen Modul, das sich sowohl an die Seitenteile als auch das Heckteil des Dachs anschließt zu verschließen, ohne dass zusätzliche Versteifungselemente, insbesondere Querversteifungselemente wie Dachholme, im Bereich des Daches vorgesehen sind. Hierzu ist das erfindungsgemäße Mitteldachmodul derart auszuführen, dass Querkräfte, die zwischen dem Heckdachteil und einem Bereich oberhalb der Frontscheibe auftreten, direkt vom Mitteldachmodul aufgenommen werden. Auf diese Weise werden einerseits zusätzliche Querspiegel überflüssig, andererseits wird ein Mitteldachmodul geschaffen, das in Längsrichtung des Fahrerhausdaches annähernd die gesamte Fläche von der Rückwand des Fahrerhauses bis in einem Bereich oberhalb der Frontscheibe des Nutzfahrzeugs überragt.

Grundsätzlich ist es für die Verwirklichung der Erfindung unerheblich, ob zur Versteifung des Fahrerhauses im Bereich oberhalb der Frontscheibe noch ein Frontdachteil vorgesehen ist, das die Fahrerhausseiten, nämlich die A-Säulen des Fahrerhauses oder die Seitendachteile mit einander verbindet, oder ob die Frontscheibe in ihrem oberen Bereich zumindest abschnittsweise direkt am Mitteldachmodul befestigt ist. Sofern ein Frontdachteil vorgesehen ist, sieht eine vorteilhafte Weiterbildung der Erfindung vor, dass das Frontdachteil wenigstens zwei Befestigungsflächen aufweist, von denen eine der Befestigung der Frontscheibe und die andere der Befestigung des Mitteldachmoduls dient.

Insbesondere in Längsrichtung des Fahrerhausdaches erstreckt sich das erfindungsgemäße Mitteldachmodul somit über einen größeren Bereich als die bislang bekannten Dachbauteile und ist damit zur Aufnahme einer Vielzahl von Fahrzeugkomponenten geeignet. Wesentlich ist, dass das Mitteldachmodul in einen Dachrahmen, der zumindest teilweise die Außenhaut des Daches an den äußeren Seiten begrenzt, eingefügt wird. Der Dachrahmen wird während des Fahrerhausrohbaus hergestellt und ist entweder geschlossen oder halboffen ausgeführt. Ein geschlossener Dachrahmen verfügt hierbei über zwei Seitendachteile, ein Heckdachteil sowie ein Frontdachteil, während der halboffene Dachrahmen lediglich über zwei Seitendachteile und ein Heckdachteil verfügt.

In einer bevorzugten Ausführungsform der Erfindung werden bereits im Fahrerhausrohbau die Seitendachteile gemeinsam mit den Seitenwänden gefertigt bzw. mit diesen verbunden und / oder das Heckdachteil wird gemeinsam mit der Rückwand des Fahrerhauses gefertigt oder ebenfalls direkt mit diesem verbunden. Erst in einem späteren Schritt der Fahrerhausmontage wird das erfindungsgemäß ausgeführte Mitteldachmodul entlang seines äußeren Umfangs an den Seitendachteilen, am Heckdachteil sowie im vorderen Bereich an der Frontscheibe befestigt. Vorzugsweise erfolgt hierbei, im Gegensatz zu den bislang bekannten Dachkonstruktionen, die Befestigung des erfindungsgemäßen Mitteldachmoduls nicht von oben auf den Seitenwänden sowie der Rückwand, sondern es wird zwischen die Seitendachteile und das Heckdachteil eingepasst und an der Frontscheibe befestigt.

In einer speziellen Weiterbildung der Erfindung ist es denkbar, dass das Mitteldachmodul wenigstens eine Funktionseinheit des Nutzfahrzeugs aufweist. Vorzugsweise verfügt das Mitteldachmodul hierbei über wenigstens eine elektronische Fahrzeugkomponente und / oder ein elektronisches Zubehörteil. Auf diese Weise ist es möglich, bereits bei der Vorgruppierung des Mitteldachmoduls eine Dachklappe, eine Antenneneinheit und / oder elektronische Einbauelemente, wie etwa Funkgeräte, Fahrtenschreiber, Radio und/oder andere Geräte der Unterhaltungselektronik zu verbauen.

Eine weitere Ausführungsform der Erfindung sieht vor, dass das Mitteldachmodul wenigstens einen Stauraum aufweist. In diesem Zusammenhang ist es denkbar, dass das erfindungsgemäße Mitteldachmodul als kompaktes, hoch integratives Modul ausgeführt wird, in dem, beispielsweise im vorderen Bereich, bereits entsprechende Stauräume vorgesehen sind. Mit einer derartigen Bauform wird auf vorteilhafte Weise sichergestellt, dass die Seitendachteile, das Heckdachteil und / oder ein Frontdachteil auf kostengünstige Weise in der Rohbaufertigung des Fahrerhauses hergestellt werden und die zusätzlich in Abhängigkeit der Kundenwünsche benötigten Fahrerhauskomponenten zunächst in das Mitteldachmodul eingebaut, also mit diesem zu einer Montageeinheit vorgruppiert werden, und erst später gemeinsam mit dem Mitteldachmodul in die im Rohbau hergestellte Dachkonstruktion eingefügt werden.

Auf bevorzugte Weise ist es ebenfalls denkbar, dass das Mitteldachmodul zumindest ein Bauteil einer Heiz-, Lüftungs-, Klima- und / oder Kühleinrichtung aufweist. Hierbei ist es einerseits vorstellbar, dass die vorgesehenen Heiz-, Lüftungs- und / oder Klimageräte zur Direktversorgung des Fahrerhauses dienen, andererseits ist es möglich, dass im Bereich des Mitteldachmoduls ein Kühlaggregat vorgesehen ist, mit dem ein zur Kühlung der zu transportierenden Fracht vorgesehener Laderaum mit der erforderlichen Kälte versorgt wird. Selbstverständlich können alternativ oder in Ergänzung zu den zuvor erwähnten Komponenten weitere Bauteile, wie Kennzeichenschilder, Rundumleuchten, Funkantennen, akustische Signalvorrichtungen, Löschvorrichtungen, Dachausstiege, Beleuchtungseinrichtungen, sowohl für den Innen- als auch den Außenbereich, Monitore, Displays und/ oder Lautsprecher bei der Vorgruppierung des Mitteldachmoduls eingebaut werden.

In einer weiteren speziellen Ausführungsform der Erfindung ist die Dachkonstruktion zumindest teilweise als Blech-Schalenkonstruktion ausgeführt. Vorzugsweise wird das Mitteldachmodul mittels einer Schweiß-, Niet-, Schraub- und / oder Klebeverbindung in die Dachkonstruktion integriert bzw. mit den Seitendachteilen, dem Heckdachteil verbunden. Eine vorteilhafte Weiterbildung der Erfindung sieht in diesem Zusammenhang vor, dass das Mitteldachmodul derart in die Dachkonstruktion integriert ist, dass an einer Verbindungslinie zwischen dem Mitteldachmodul und den Seitendachteilen, zwischen dem Mitteldachmodul und dem Heckdachteil eine Ebene äußere Oberfläche gebildet wird. Auf vorteilhafte Weise wird eine derartige Integration des Mitteldachmoduls in die Dachkonstruktion dadurch erreicht, dass die entsprechenden, in Umfangsrichtung verlaufenden Flächen des Mitteldachmoduls auf Stoß mit den entsprechenden, den beschriebenen Dachrahmen bildenden Bauteilen der Dachkonstruktion verbunden werden.

Eine vorteilhafte Weiterbildung sieht ferner vor, dass das erfindungsgemäße Mitteldachmodul zumindest teilweise ein Material aus einem Kunststoff aufweist. In bevorzugter Weise eignet sich hierbei ein faserverstärkter Kunststoff, insbesondere ein glas- und / oder kohlenstofffaserverstärkter Kunststoff. Mit einer derartigen Bauweise sind Gewichtseinsparungen zu realisieren, die wiederum zur Verbesserung der Wirtschaftlichkeit und Umweltverträglichkeit eines Nutzfahrzeugs beitragen.

Im Folgenden werden einige Aspekte der Erfindung unter Bezugnahme auf die Figuren ohne Beschränkung des allgemeinen Erfindungsgedankens näher erläutert. Es zeigen:
- Figur 1:: Frontansicht eines Nutzfahrzeugfahrerhauses mit Hochdach und vorgruppiertem, separatem Mitteldachmodul;
- Figur 2:: Heckansicht eines Nutzfahrzeugfahrerhauses mit Hochdach und bereits vorgruppiertem, separatem Mitteldachmodul sowie
- Figur 3:: Nutzfahrzeugfahrerhaus mit Hochdach und integriertem Mitteldachmodul in Einbaulage.

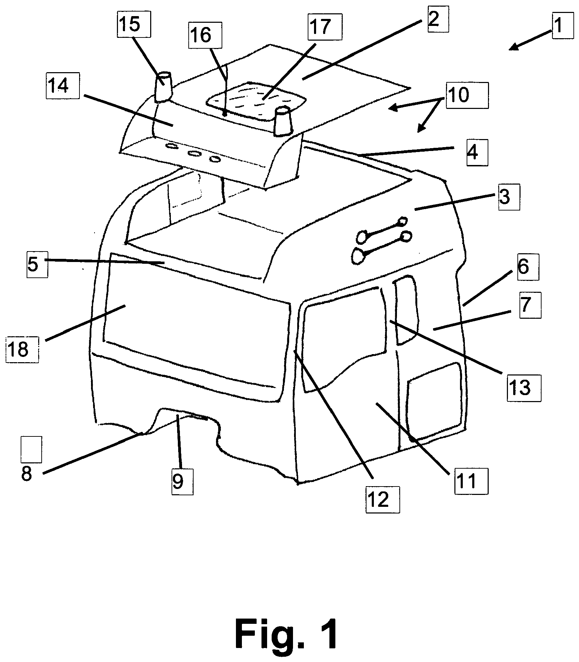

Figur 1 zeigt ein Nutzfahrzeugfahrerhaus 1, das über eine Rückwand 6, zwei Seitenwände 7, eine Frontwand 8, einen Fahrerhausboden 9 sowie eine Dachkonstruktion 10 verfügt. Bei der Herstellung eines derartigen Nutzfahrzeugfahrerhauses erfolgt nach Abschluss des Fahrerhausrohbaus üblicherweise zunächst die Lackierung und anschließend die Komplettierung, in deren Verlauf sämtliche Fahrerhausbauteile, insbesondere des Interieurs, montiert werden. In diesem Fertigungsablauf ist der Fahrerhausrohbau vergleichsweise kostengünstig zu realisieren, da dieser weitgehend automatisiert ist und sich somit im Vergleich zur Bandmontage der Fahrerhauskomponenten durch einen sehr geringen Personaleinsatz auszeichnet. Aus diesem Grund ist es einerseits wünschenswert, möglichst viele Bauteile des Fahrerhauses im Bereich des Fahrerhausrohbaus herzustellen sowie mit einander zu verbinden und andererseits Montagezeiten im Hauptmontageband zu minimieren, indem außerhalb dieses Bereichs bereits eine Vielzahl von Fahrerhauskomponenten jeweils zu einfach handhabbaren Modulen vorgruppiert werden.

Wesentlich an der in Figur 1 gezeigten Ausführung eines Nutzfahrzeugfahrerhauses 1 ist, dass die Dachkonstruktion 2 über ein Heckdachteil 4, zwei Seitendachteile 3 sowie ein Frontdachteil 5 verfügt, die einen geschlossenen Dachrahmen bilden. Zwischen dem Frontdachteil 5, dem Heckdachteil 4 sowie den beiden Seitendachteilen 3 ist ein Hohlraum vorgesehen, so dass das Dach 10 des Fahrerhauses 1 in diesem Bereich nach oben noch nicht verschlossen ist. Das dargestellte Fahrerhaus 1 weist vor allem den Vorteil auf, dass die zuvor genannten Dachbauteile, nämlich Heckdachteil 4, Seitendachteile 3 sowie Frontdachteil 5 bereits in der Rohbaufertigung des Fahrerhauses 1 und , wie zuvor erläutert, besonders kostengünstig herstellbar sind. Das Frontdachteil 5 übernimmt in diesem Fall als wesentliche Funktionen, einerseits eine Anlagefläche zur Befestigung der Frontscheibe 18 in ihrem oberen Bereich bereit zu stellen und andererseits das Fahrerhaus im Bereich der A-Säule 12 in Querrichtung zu versteifen.

Vorzugsweise parallel zur Rohbaufertigung des Fahrerhauses 1 erfolgt die Fertigung und Vorgruppierung eines Mitteldachmoduls 2. Das in Figur 1 dargestellte Mitteldachmodul 2 verfügt nach Abschluss der Vorgruppierung bereits über zwei Rundumleuchten 15, eine Antenneneinheit 16, eine Dachklappe 17 sowie einen Stauraum 14 im vorderen Bereich. In gleicher Weise sind auch der benötigte Kabelstrang sowie eventuell erforderliche elektronische Komponenten bereits in das Mitteldachmodul 2 integriert. Die Vorgruppierung des Mitteldachmoduls 2 erfolgt hierbei auf geeignete Weise in einem Bereich außerhalb des Fahrerhaushauptmontagebandes.

Nach Fertigstellung des Fahrerhausrohbaus und der Lackierung wird das Fahrerhaus 1 in das bereits erwähnte Fahrerhaushauptmontageband eingeschleust, wo es mit den vom Kunden gewünschten Komponenten komplettiert wird. Während dieser Bandmontage erfolgt auch die Integration des Mitteldachmoduls 2 in die innerhalb der Dachkonstruktion 10 vorgesehene Öffnung. Hierbei wird das Mitteldachmodul 2 von oben innerhalb des vorgesehenen Dachrahmenes, also in den Bereich zwischen dem Frontdachteil 5, dem Heckdachteil 4 und den beiden Seitendachteilen 3 platziert und mit diesen entlang seines Umfangs verbunden. In Abhängigkeit der Wahl des für das Mitteldachmodul 2 gewählten Werkstoffs erfolgt die Befestigung des Mitteldachmoduls 2 an der Dachkonstruktion 10 durch Schweißen und / oder durch Kleben.

Nach Integration des Mitteldachmoduls 2 ist das Fahrerhaus 1 nach oben verschlossen. Lediglich durch Betätigen der Dachluke 17 ist eine Öffnung im Mitteldachmodul 2 und somit im Dach 10 freizugeben.
Das Mitteldachmodul 2 erstreckt sich in Längsrichtung des Fahrerhauses 1 vom Heckdachteil 4 bis zum Frontdachteil 5 in einen Bereich oberhalb der Frontscheibe 18. Die entlang des Umfangs des Mitteldachmoduls 2 verlaufende Verbindungslinie zwischen dem Mitteldachmodul 2 und dem Heckdachteil 4, dem Frontdachteil 5 sowie den Seitendachteilen 3 bildet einen ebenen Übergang zwischen dem Mitteldachmodul 2 und den angrenzenden Bauteilen der Dachkonstruktion 10.

Ein wesentliches Merkmal des dargestellten Mitteldachmoduls 2 besteht darin, dass es sich als einteiliges Bauteil vom Heckdachteil 4 bis in einen Bereich oberhalb der Frontscheibe 18 des Nutzfahrzeugs erstreckt. Querkräfte, die während der Fahrt des Nutzfahrzeugs im Bereich des Daches 10 zwischen dem Heckdachteil 4 und der Frontscheibe 18 auftreten, werden zuverlässig vom Mitteldachmodul 2 aufgenommen. Zusätzliche Querspiegel bzw. Querstreben oder Querholme, etwa im Bereich der B-Säule 13, sind aufgrund der in Figur 1 dargestellten Ausführungsform der Dachkonstruktion 10 nicht erforderlich. Sofern eine Versteifung des Mitteldachmoduls 2 in Querrichtung erforderlich ist, werden entweder die einzelnen Bereiche in geeigneter Weise dimensioniert bzw. konstruiert und / oder, zweckmäßige, widerstandsfähige Werkstoffe ausgewählt. Eventuell aufgrund des Fahrzeugtyps erforderliche Querversteifungen sind direkt in das Mitteldachmodul 2 integriert und werden gemeinsam mit dem Mitteldachmodul 2 im Hauptmontageband in den Dachrahmen der Dachkonstruktion 10 eingefügt. Daher sind vor der Montage eines Mitteldachmoduls gemäß Figur 1 keine derartigen Querversteifungselemente, die während des Fahrerhausrohbaus in den aus Heckdachteil 4, Seitendachteilen 3 und Frontdachteil 5 gebildeten Dachrahmen eingefügt werden, vorgesehen.

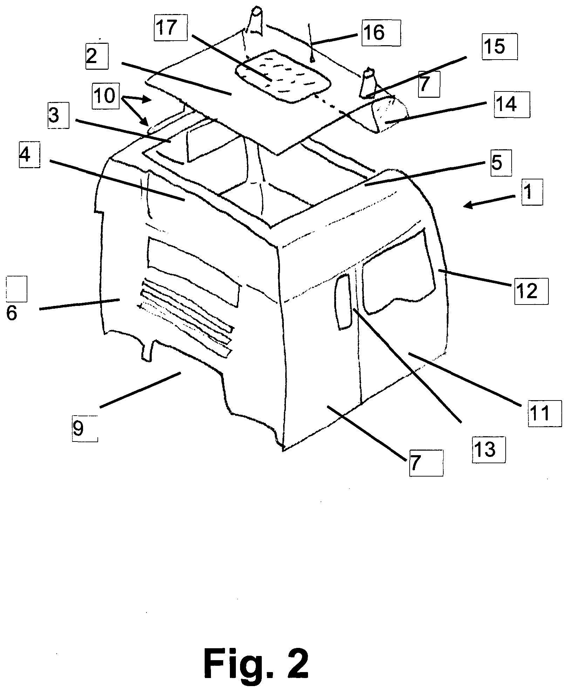

In Ergänzung zu Figur 1 ist in Figur 2 eine Heckansicht des Nutzfahrzeugfahrerhauses 1 mit Hochdach und vorgruppiertem Mitteldachmodul 2 vor dessen Integration in den aus Frontdachteil 5, Heckdachteil 4 sowie den beiden Seitendachteilen 3 gebildeten Dachrahmen dargestellt. Ein Fahrerhaus 1, wie in den Figuren 1 und 2 gezeigt, das über ein sogenanntes Hochdach verfügt, zeichnet sich vor allem dadurch aus, dass es dem Fahrer in seinem Inneren viel Raum und in der Regel eine komfortable Stehhöhe bietet. Für die erfindungsgemäße Ausführung einer Dachkonstruktion 10 ist es allerdings nicht notwendig, dass das Dach 10 als sogenanntes Hochdach ausgeführt ist. Vielmehr kann die erfindungsgemäße Dachkonstruktion 10 sowohl bei Hoch- als auch Normaldächern zum Einsatz kommen.
In Figur 2 ist ebenfalls ein Mitteldachmodul 2 dargestellt, das umfangsseitig über geeignete Fügeflächen am Heckdachteil 4, den Seitendachteilen 3 und dem Frontdachteil 3 befestigbar ist. Die Dachteile 3, 4, 5, die nicht durch das Mitteldachmodul 2 gebildet werden, können bereits im Wege der Fahrerhausrohbaufertigung hergestellt und mit den übrigen Rohbaukomponenten verbunden werden. Auf diese Weise sind deutliche Kosteneinsparungen bei der Fertigung eines Fahrerhauses gegenüber den bekannten Fertigungsabläufen realisierbar.

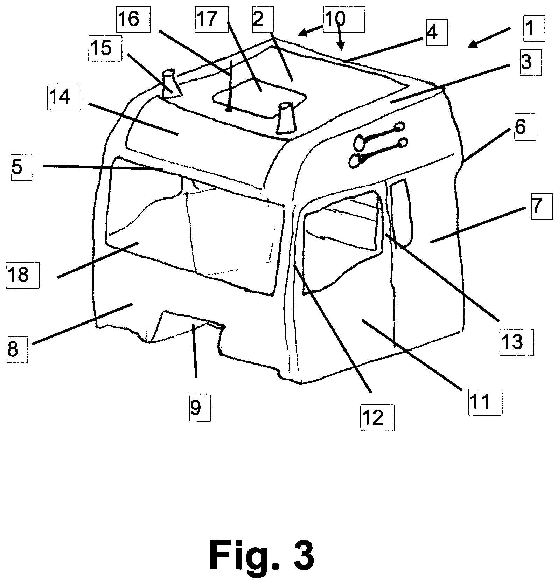

Figur 3 zeigt ein Mitteldachmodul 2 in seiner Einbaulage. Das Mitteldachmodul 2 ist in den aus Frontdachteil 5, Heckdachteil 4 sowie den beiden Seitendachteilen 3 gebildeten Dachrahmen eingesetzt und entlang seines äußeren Umfangs auf Stoß mit den entsprechenden Dachbauteilen verbunden worden. Das Dach 10 des Fahrerhauses 1 ist somit nach oben verschlossen. Der Anschluss des Mitteldachmoduls 2 an die dieses umfangsseitig umgebenden Dachkomponenten erfolgt derart, dass entlang der umfangseitigen Verbindungslinie, also der Stoßfläche zwischen Mitteldachmodul 2 und Dachteilen 3, 4, 5, ein ebener Übergang entsteht. Nach Integration des Mitteldachmoduls 2 ist somit nicht mehr unmittelbar erkennbar, dass die den ursprünglichen Dachrahmen bildenden Dachteile in der Rohbaufertigung des Fahrerhauses hergestellt wurden, während das Mitteldachmodul 2 erst nachträglich als kompaktes, hochintegratives Bauteil in den Dachrahmen eingesetzt wurde.
Aufgrund der Vorgruppierung des Mitteldachmoduls 2 mit den benötigten bzw. vom Kunden gewünschten Fahrzeugkomponenten, wie in diesem Fall Rundumleuchten 15, Radioantenne 16, Dachklappe 17 sowie Staufächern 14 im vorderen Bereich des Hochdaches, kann eine kostengünstige Bauweise des Fahrerhauses 1 realisiert werden.
Das Mitteldachmodul 2 erstreckt sich in Längsrichtung des Fahrerhauses 1 über den größten Teil des Fahrerhausdaches 10. Lediglich das Heckdachteil 4, das das Mitteldachmodul 2 nach hinten begrenzt, sowie die das Modul seitlich begrenzenden Seitendachteile 3 verfügen über horizontale Flächen, die im seitlichen bzw. hinteren Bereichs des Fahrerhausdaches 10 einen kleinen Teil der Außenhaut bilden.

Mit der beschriebenen technischen Lösung ist es insbesondere möglich, auf kostengünstige Weise einen Fahrerhausrohbau herzustellen, in den im Dachbereich ein vorgruppiertes Mitteldachmodul 2 mit einer Vielzahl bereits integrierter Komponenten eingesetzt wird.

### Bezugszeichenliste

- 1: Fahrerhaus
- 2: Mitteldachmodul
- 3: Seitendachteil
- 4: Heckdachteil
- 5: Frontdachteil
- 6: Rückwand
- 7: Seitenwand
- 8: Frontwand
- 9: Fahrerhausboden
- 10: Dachkonstruktion
- 11: Fahrerhaustür
- 12: A-Säule
- 13: B-Säule
- 14: Stauraum
- 15: Rundumleuchte
- 16: Antenne
- 17: Dachluke
- 18: Frontscheibe

## Patentansprüche

1. Fahrerhaus eines Nutzfahrzeugs mit einem Rohbaumodul, das eine Vorderwand (8), zwei Seitenwände (7), eine Rückwand (6), einen Fahrerhausboden (9) und eine Dachkonstruktion (10), die mit einander verbunden sind, aufweist, wobei die Dachkonstruktion (10) das Rohbaumodul nach oben zumindest teilweise verschließt,
wobei die Dachkonstruktion (10) über einen Dachrahmen mit zwei jeweils wenigstens abschnittsweise die Seitenwände (7) nach oben begrenzenden Seitendachteilen (3) und mit einem die Rückwand (6) nach oben begrenzenden, die Seitendachteile (3) verbindenden Heckdachteil verfügt und wobei ein Mitteldachmodul (2) vorgesehen ist, das derart in den Dachrahmen einsetzbar ist, dass sich das Mitteldachmodul (2) in seiner Einbaulage an das Heckdachteil (4) sowie die Seitendachteile (3) anschließt und sich vom Heckdachteil (4) bis in einen Bereich oberhalb einer Frontscheibe (18) des Nutzfahrzeugs erstreckt,
**dadurch gekennzeichnet,**
**dass** die Frontscheibe (18) des Nutzfahrzeugs zumindest abschnittsweise direkt mit dem in Einbaulage befindlichen Mitteldachmodul (2) verbunden ist.

2. Fahrerhaus nach Anspruch 1,
**dadurch gekennzeichnet, dass** das Mitteldachmodul (2) wenigstens eine Funktionseinheit des Nutzfahrzeugs aufweist.

3. Fahrerhaus nach Anspruch 1 oder 2,
**dadurch gekennzeichnet, dass** das Mitteldachmodul (2) wenigstens eine elektronische Fahrzeugkomponente und/oder ein elektronisches Zubehörteil aufweist.

4. Fahrerhaus nach einem der Ansprüche 1 bis 3,
**dadurch gekennzeichnet, dass** das Mitteldachmodul (2) wenigstens einen Stauraum (14) aufweist.

5. Fahrerhaus nach einem der Ansprüche 1 bis 4,
**dadurch gekennzeichnet, dass** das Mitteldachmodul (2) zumindest ein Bauteil einer Heiz-, Lüftungs-, Klima- und/oder Kühleinrichtung aufweist.

6. Fahrerhaus nach einem der Ansprüche 1 bis 5,
**dadurch gekennzeichnet, dass** das Mitteldachmodul (2) zumindest teilweise einen Kunststoff, insbesondere einen faserverstärkten Kunststoff aufweist.

7. Fahrerhaus nach einem der Ansprüche 1 bis 6,
**dadurch gekennzeichnet, dass** die Dachkonstruktion (10) zumindest teilweise als Blech-Schalenkonstruktion ausgeführt ist.

8. Fahrerhaus nach einem der Ansprüche 1 bis 6,
**dadurch gekennzeichnet, dass** das Mitteldachmodul (2) mittels einer Schweiß-, Niet-, Schraub- und/oder Klebeverbindung mit der Dachkonstruktion (10) verbindbar ist.

9. Fahrerhaus nach einem der Ansprüche 1 bis 7,
**dadurch gekennzeichnet, dass** das Mitteldachmodul (2) derart in den Dachrahmen der Dachkonstruktion (10) integriert ist, dass an einer Verbindungslinie zwischen dem Mitteldachmodul (2) und den Seitendachteilen (3) und/oder zwischen dem Mitteldachmodul (2) und dem Heckdachteil (4) eine ebene äußere Oberfläche gebildet wird.

10. Fahrerhaus nach einem der Ansprüche 1 bis 9,
**dadurch gekennzeichnet, dass** das Mitteldachmodul (2) mit den Seitendachteilen (3) und/oder dem Heckdachteil (4) auf Stoß verbunden ist.

## Claims

1. Driver cab of a commercial vehicle with a bodyshell module which has a front wall (8), two side walls (7), a rear wall (6), a driver cab floor (9) and a roof structure (10) which are connected to one another, wherein the roof structure (10) at least partially closes the bodyshell module upwards, wherein the roof structure (10) has a roof frame with two side roof parts (3) in each case at least partially upwardly bounding the side walls (7), and with a rear roof part which upwardly bounds the rear wall (6) and connects the side roof parts (3), and wherein a central roof module (2) is provided which is insertable into the roof frame in such a manner that the central roof module (2) in its fitted position adjoins the rear roof part (4) and the side roof parts (3) and extends from the rear roof part (4) into a region above a windscreen (18) of the commercial vehicle, **characterized in that** the windscreen (18) of the commercial vehicle is at least partially connected directly to the central roof module (2) which is in the fitted position.

2. Driver cab according to Claim 1, **characterized in that** the central roof module (2) has at least one functional unit of the commercial vehicle.

3. Driver cab according to Claim 1 or 2, **characterized in that** the central roof module (2) has at least one electronic vehicle component and/or an electronic accessory.

4. Driver cab according to one of Claims 1 to 3, **characterized in that** the central roof module (2) has at least one storage compartment (14).

5. Driver cab according to one of Claims 1 to 4, **characterized in that** the central roof module (2) has at least one component of a heating, ventilating, air-conditioning and/or cooling device.

6. Driver cab according to one of Claims 1 to 5, **characterized in that** the central roof module (2) at least partially comprises a plastic, in particular a fibre-reinforced plastic.

7. Driver cab according to one of Claims 1 to 6, **characterized in that** the roof structure (10) is at least partially designed as a sheet-metal shell structure.

8. Driver cab according to one of Claims 1 to 6, **characterized in that** the central roof module (2) is connectable to the roof structure (10) by means of a welding, riveting, screwing and/or adhesive bonding connection.

9. Driver cab according to one of Claims 1 to 7, **characterized in that** the central roof module (2) is integrated in the roof frame of the roof structure (10) in such a manner that a flat outer surface is formed at a connecting line between the central roof module (2) and the side roof parts (3) and/or between the central roof module (2) and the rear roof part (4).

10. Driver cab according to one of Claims 1 to 9, **characterized in that** the central roof module (2) is butt-connected to the side roof parts (3) and/or to the rear roof part (4).

## Revendications

1. Cabine de conducteur d'un véhicule utilitaire, dotée d'un module de caisse brute, qui présente une paroi avant (8), deux parois latérales (7), une paroi arrière (6), un plancher de cabine de conducteur (9) et une construction de toit (10), qui sont connectées les unes aux autres, la construction de toit (10) fermant au moins en partie vers le haut le module de caisse brute,
la construction de toit (10) disposant d'un cadre de toit avec deux parties de toit latérales (3) délimitant vers le haut à chaque fois au moins en partie les parois latérales (7) et avec une partie de toit arrière délimitant vers le haut la paroi arrière (6), reliant les parties de toit latérales (3), et un module de toit central (2) étant prévu, lequel peut être inséré dans le cadre de toit de telle sorte que le module de toit central (2), dans sa position installée, se raccorde à la partie de toit arrière (4) et aux parties de toit latérales (3) et s'étende depuis la partie de toit arrière (4) dans une région au-dessus d'un pare-brise (18) du véhicule utilitaire,
**caractérisée en ce que**
le pare-brise (18) du véhicule utilitaire est au moins en partie raccordé directement au module de toit central (2) se trouvant dans la position d'installation.

2. Cabine de conducteur selon la revendication 1, **caractérisée en ce que** le module de toit central (2) présente au moins une unité fonctionnelle du véhicule utilitaire.

3. Cabine de conducteur selon la revendication 1 ou 2,
**caractérisée en ce que** le module de toit central (2) présente au moins un composant de véhicule électronique et/ou un accessoire électronique.

4. Cabine de conducteur selon l'une quelconque des revendications 1 à 3,
**caractérisée en ce que** le module de toit central (2) présente au moins un espace de rangement (14).

5. Cabine de conducteur selon l'une quelconque des revendications 1 à 4,
**caractérisée en ce que** le module de toit central (2) présente au moins un composant d'un dispositif de chauffage, de ventilation, de climatisation et/ou de refroidissement.

6. Cabine de conducteur selon l'une quelconque des revendications 1 à 5,
**caractérisée en ce que** le module de toit central (2) présente au moins en partie un plastique, en particulier un plastique renforcé par des fibres.

7. Cabine de conducteur selon l'une quelconque des revendications 1 à 6,
**caractérisée en ce que** la construction de toit (10) est réalisée au moins en partie sous forme de construction à coque en tôle.

8. Cabine de conducteur selon l'une quelconque des revendications 1 à 6,
**caractérisée en ce que** le module de toit central (2) peut être connecté au moyen d'une connexion par soudage, par rivetage, par vissage et/ou par collage à la construction de toit (10).

9. Cabine de conducteur selon l'une quelconque des revendications 1 à 7,
**caractérisée en ce que** le module de toit central (2) est intégré dans le cadre de toit de la construction de toit (10) de telle sorte qu'une surface extérieure plane soit formée au niveau d'une ligne de connexion entre le module de toit central (2) et les parties de toit latérales (3) et/ou entre le module de toit central (2) et la partie de toit arrière (4).

10. Cabine de conducteur selon l'une quelconque des revendications 1 à 9,
**caractérisée en ce que** le module de toit central (2) est connecté par aboutement avec les parties de toit latérales (3) et/ou avec la partie de toit arrière (4).
